# FASCICULE DE BREVET EUROPEEN

(11) **EP 0 994 398 B1**
(45) Date de publication et mention de la délivrance du brevet: **21.01.2009**
(21) Numéro de dépôt: 98119480.6
(22) Date de dépôt: 15.10.1998
(51) Int. Cl.: G04D 3/00, B23P 15/14, B21D 53/28, G04B 13/02

(54) **Procédé de fabrication d'un mobile d'horlogerie et mobile d'horlogerie fabriqué selon ce procédé**
Verfahren zur Herstellung eines Zahnrades für eine Uhr sowie ein nach diesem Verfahren hergestelltes Zahnrad
Method for manufacturing a gear wheel for a timepiece and gear wheel manufactured by said method

(43) Date de publication de la demande: 19.04.2000
(73) Titulaire: ETA SA Manufacture Horlogère Suisse, 2540 Grenchen (CH)
(72) Inventeur: Bettelini, Marco, 2515 Prêles (CH)
(74) Mandataire: Ravenel, Thierry Gérard Louis

(56) Documents cités:
- CH-A- 677 168
- PATENT ABSTRACTS OF JAPAN vol. 10, no. 218 (M-503) [2274], 30 juillet 1986 & JP 61 055472 A (CITIZEN WATCH CO LTD), 19 mars 1986

## Description

La présente invention concerne un procédé de fabrication d'un mobile d'horlogerie comportant une planche pourvue d'une première série de dents dans sa périphérie et d'une seconde série de dents dressées perpendiculairement à la planche. Cette invention concerne aussi un mobile d'horlogerie fabriqué selon ce procédé.

Il a déjà été proposé la fabrication d'un mobile d'horlogerie selon la méthode de fluage à froid d'un acier d'emboutissage. Ainsi, le document CH-B-677 168 propose-t-il, dans le but d'optimaliser la fabrication et l'utilisation de mobiles d'horlogerie, un mobile comportant une roue surmontée d'un pignon, le tout comprenant un palier pouvant être soit des creusures recevant des tétons, soit des tétons entrant dans une creusure. La planche, le pignon et le palier sont faits d'une seule pièce et obtenus par déformation plastique, comprenant notamment le forgeage et la compression d'une plaque de matériau apte au fluage à froid.

Cependant le mobile concerné dans cette citation est un simple rouage comportant de façon très classique, une planche munie de dents périphériques en plus ou moins grand nombre et un pignon surmontant cette planche, ce pignon ne présentant qu'un nombre limité de dents (six en l'occurrence), ces dents étant dirigées dans le même sens que les dents de la planche. Rien n'indique ni ne suggère dans le document cité que le procédé décrit pourrait aussi être utilisé pour fabriquer un renvoi de texture beaucoup plus fine, c'est-à-dire un mobile dont la seconde denture serait une denture de chant comportant un nombre important de dents de dimension beaucoup plus réduite que les dimensions affectant le simple pignon horloger cité dans le document.

C'est ainsi que le procédé de fluage à froid d'un acier d'emboutissage a été essayé pour obtenir un renvoi de mise à l'heure ou de quantième présentant une structure plus compliquée que la structure d'un simple mobile ne comportant qu'une planche et un pignon. A l'étonnement du demandeur de la présente invention, ce dernier a réussi a produire, contre toute attente, des pièces d'excellente facture, le procédé en question révélant ainsi un effet surprenant difficilement imaginable auparavant.

Pour atteindre ce but, le procédé de la présente invention comporte la succession des étapes suivantes :
- on fournit une bande d'acier d'emboutissage,
- on découpe un anneau circulaire dans la bande, le diamètre intérieur de cet anneau circonscrivant une pastille de laquelle sera tiré le mobile, ladite pastille restant attachée à la bande par une pluralité de ponts,
- sur une face de la pastille on applique une matrice perforée d'une pluralité d'ouvertures disposées en cercle et sur l'autre face de la pastille on presse la face plane d'un cylindre pour faire pénétrer par fluage l'acier à l'intérieur des ouvertures de la matrice pour former la seconde série de dents après quoi on éloigne la matrice et le cylindre de la pastille,
- on découpe un trou au centre de la pastille, et
- on recueille le mobile terminé en découpant la première série de dents dans la pastille, ce découpage entraînant la séparation dudit mobile de ladite bande.

Les avantages et l'intérêt d'un tel procédé seront expliqués maintenant en détail à l'aide de la description qui suit et des dessins qui l'illustrent à titre d'exemple non limitatif et dans lesquels :
- la figure 1 est une vue en coupe d'un mécanisme d'horlogerie utilisant le mobile fabriqué selon le procédé de l'invention,
- la figure 2 est une vue en perspective d'un premier mode d'exécution du mobile d'horlogerie fabriqué selon le procédé de l'invention,
- la figure 3 est une vue en coupe du mobile de la figure 2,
- la figure 4 est une vue en coupe d'un second mode d'exécution du mobile fabriqué selon le procédé de l'invention,
- les figures 5 et 6, 7 et 8, 9 et 10, 11 et 12 illustrent respectivement les première, deuxième, troisième et quatrième étapes du procédé de fabrication du mobile d'horlogerie selon l'invention.

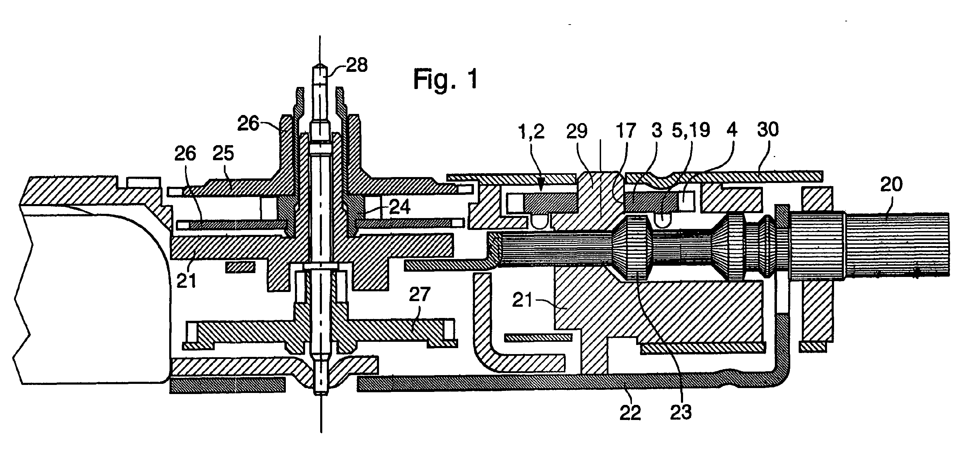

Le mécanisme d'horlogerie montré en figure 1 est un mécanisme de mise à l'heure comportant une tige 20 susceptible de glisser dans une platine 21 et crantée sur deux positions, poussée et tirée, par un ressort de tige 22. Cette tige comporte un pignon 23 engrenant avec une denture de chant 5, 19 d'un renvoi 1, 2, ce renvoi et sa fabrication faisant l'objet de la présente invention. Le renvoi 1, 2 comporte une planche 3 pourvue d'une première série de dents 4 dans sa périphérie et d'une seconde série de dents 5, 19 dressées perpendiculairement à la planche 3. Le renvoi 1, 2 est en prise avec une minuterie (non représentée au dessin), cette minuterie entraînant d'une part une chaussée 24 et d'autre part une roue des heures 25. La roue des heures 25 est solidaire d'un canon 26 sur lequel est emmanchée une aiguille des heures (non représentée). La chaussée 24 porte l'aiguille des minutes (non représentée) et la roue des minutes 26 qui y est ajustée à friction. La figure 1 montre encore une roue de secondes 27 solidaire d'un arbre 28 sur lequel est emmanchée une aiguille de seconde (non représentée). Quand, en positon tirée on tourne la tige de mise à l'heure 20, on entraîne le renvoi 1, 2 qui entraîne à son tour, via la minuterie, les aiguilles de minutes et d'heures. Pendant cette opération, la roue des minutes 26 patine sur la chaussée 24, cette roue étant retenue par le mécanisme moteur (non représenté). On mentionnera encore que le renvoi 1, 2 comporte un trou central 17 traversé par un téton 29 solidaire de la platine 21. Le renvoi 1, 2 est engagé librement sur le téton 29. Enfin un pont de minuterie 30 couvre le mécanisme de mise à l'heure.

On en vient maintenant au renvoi 1, 2 proprement dit et à son procédé de fabrication.

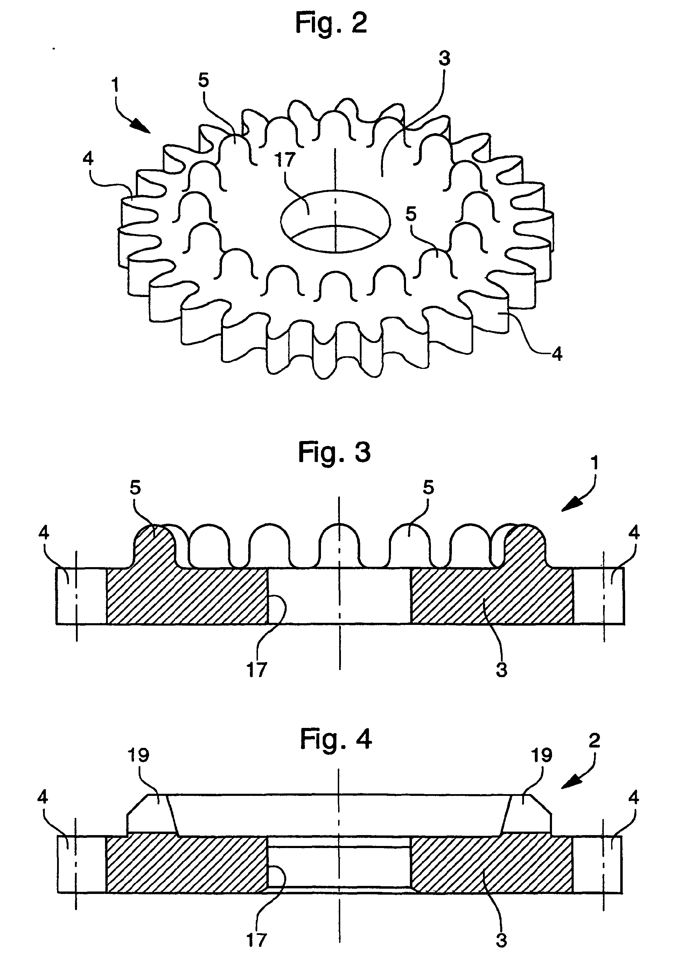

Un premier mode d'exécution du renvoi 1 est illustré sur les figures 2 et 3. Comme déjà dit, ce renvoi comporte une planche 3 pourvue d'une première série de dents 4 entourant sa périphérie et d'une seconde série de dents 5 dressées perpendiculairement à la planche 3, cette seconde série de dents étant aussi appelée denture de chant. Ce premier mode d'exécution se caractérise par une seconde série de dents 5 cylindriques comme le montre bien la figure 3. Le sommet de chaque dent 5 est arrondi, mais pourrait être plat comme on le verra plus bas.

Un second mode d'exécution du renvoi 2 est illustré sur la figure 4. La seule différence d'avec le premier mode est que la denture de chant présente des dents de forme 19 qui paraissent comme taillées selon la forme habituelle de réalisation de ce genre de renvoi. On reviendra ci-après sur ce second mode d'exécution.

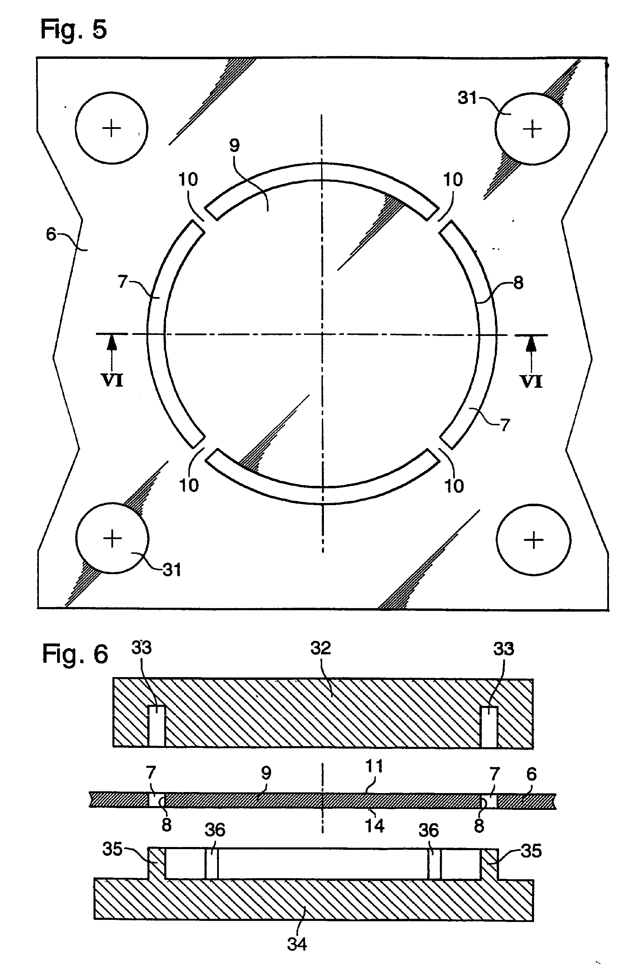

Les deux modes d'exécution décrits ci-dessus font appel, selon l'invention, à un procédé de fabrication qui comporte la succession des étapes suivantes, ces étapes étant illustrées par les figures 5 à 12.

On fournit tout d'abord une bande d'acier d'emboutissage 6. Pour donner un exemple, cette bande, malléable à froid, présente une largeur de 16 mm et une épaisseur de 0.3 mm. Elle est équipée de trous pilotes 31 perforés par une étampe progressive qui va se charger successivement de toutes les étapes de fabrication. Les trous pilotes permettent de centrer la bande avec exactitude entre les diverses matrices et poinçons qui se présentent les uns après les autres dans l'étampe progressive.

La première étape est illustrée par les figures 5 et 6. Ici, on découpe un anneau circulaire 7 dans la bande 6. Le diamètre intérieur 8 de cet anneau 7 circonscrit une pastille 9 de laquelle sera tiré le mobile d'horlogerie recherché. Comme le montre la figure 5, la pastille 9 reste attachée à la bande 6 par un certain nombre de ponts 10, soit quatre ponts 10 dans l'exemple montré sur la figure. Les outils utilisés pour cette opération sont montrés en coupe sur la figure 6 qui montre aussi la bande 6 après découpage de l'anneau 7, la coupe étant opérée selon la ligne VI-VI de la figure 5. L'outil de découpage comporte une matrice 32 percée de quatre segments d'anneau 33 et un poinçon 34 présentant quatre segments correspondants 35 interrompus par quatre ponts 36.

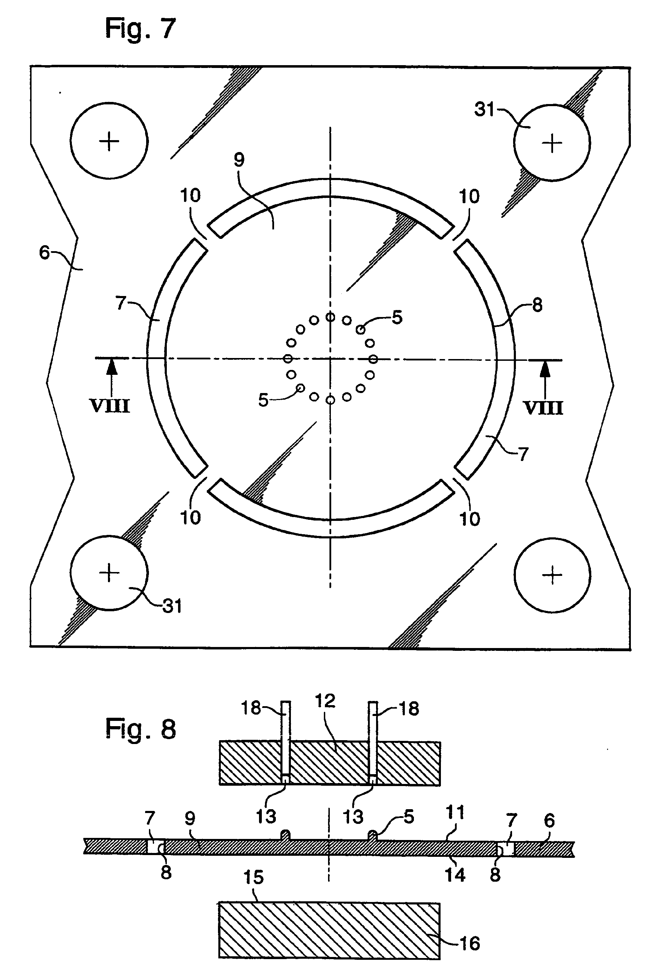

La deuxième étape est illustrée par les figures 7 et 8. Comme le montre la figure 7, la pastille 9 présente, après cette opération, une seconde série de dents 5 dressées perpendiculairement à ladite pastille. Les outils utilisés pour cette deuxième étape sont montrés en coupe sur la figure 8 qui montre aussi la bande 6 après fluage, la coupe étant opérée selon la ligne VIII-VIII de la figure 7, l'opération de fluage se déroulant de la façon suivante. Sur une face 11 de la pastille 9 on applique une matrice 12 perforée d'une pluralité d'ouvertures 13. Sur l'autre face 14 de la pastille 9, on presse la face plane 15 d'un cylindre 16 pour faire pénétrer par fluage l'acier d'emboutissage à l'intérieur des ouvertures 13 de la matrice 12.

Les figures 7 et 8, comme les figures suivantes d'ailleurs, montrent une seconde série de dents cylindriques 5. Pour ce faire, la matrice 12 est percée d'une pluralité de trous cylindriques 13. Cette forme cylindrique de dents, par ailleurs inhabituelle, permet une transmission de mouvement beaucoup plus douce que celle obtenue avec des dents taillées de façon classique. On obtient ainsi, un mouvement harmonique qui se distingue par l'absence de tout grattage assurant un plus grand confort lors de l'opération de mise à l'heure. On mentionnera encore que la pluralité de dents 5 dont il est question ici concerne un nombre très important de dents qui n'a rien à voir avec les quelques dents (cinq ou six) dont est composé un pignon d'horlogerie. Ainsi, comme on l'a dit plus haut, on parvient avec le procédé décrit, par un effet surprenant et inattendu, à obtenir une grande quantité de dents, ces dents présentant par ailleurs des dimensions très réduites. Pour donner un exemple, la seconde série de dents 5 du renvoi décrit comporte seize dents dont le diamètre du cylindre n'excède pas 0.2 mm.

La hauteur des dents 5 peut être contrôlée par la force avec laquelle on appuie le cylindre 16 contre la face 14 de la pastille 9. Dans certains cas cependant, on limitera cette hauteur en disposant dans chaque trou 13 de la matrice 12 une goupille 18. Quelle que soit la solution choisie, on comprend maintenant la raison d'être de l'anneau 7 découpé dans la bande en première étape du procédé. En effet, lors de la compression, la matière va fluer non seulement dans les trous 13 de la matrice 12 pour former les dents 5, mais encore latéralement dans le sens longitudinal de la bande 6. L'anneau 7, en ménageant un vide autour de la pastille 9, va donc faire place à l'excès de matière provenant de ce fluage et permettre ainsi un contrôle plus rigoureux de la formation des dents 5. Dans l'exemple cité et après compression, l'épaisseur du centre de la pastille passe de 0.3 à 0.28 mm.

La matrice 12 n'est pas limitée au fait que les ouvertures 13, disposées en cercle dans la matrice, sont de configuration cylindrique. Ces ouvertures en effet pourraient être des trous de forme pour former une seconde série de dents de forme. Ces dents seraient alors comme celles représentée à la figure 4 sous la référence 19. Ces dents 19, formées aussi par fluage de matière, présentent la même configuration que celles obtenues de façon classique par taillage.

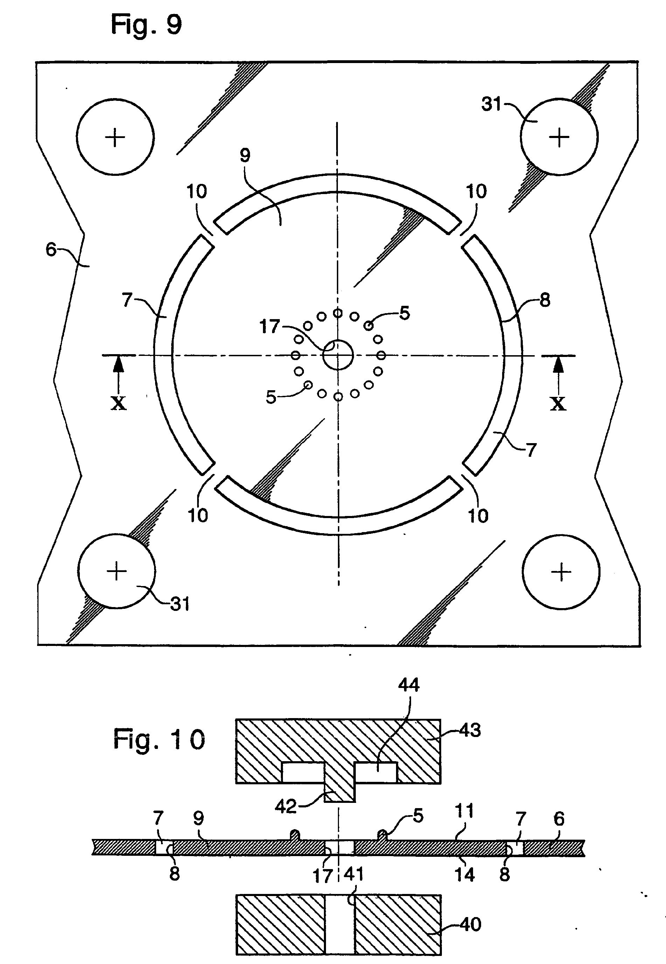

La troisième étape est illustrée par les figures 9 et 10. Comme le montre la figure 9, la pastille 9 est découpée d'un trou 17 en son centre. Ce trou 17 est utilisé, comme on le voit sur la figure 1, pour fixer à rotation libre le renvoi 1, 2 sur le téton 29 de la platine 21. Les outils utilisés pour cette opération sont montrés en coupe sur la figure 10 qui montre aussi la bande 6 après découpage du trou 17, la coupe étant opérée selon la ligne X-X de la figure 9. L'outil de découpage comporte une matrice 40 percée d'un trou 41 et un poinçon 42 taillé dans un bloc 43. Le trou 41, et le poinçon 42 sont dimensionnés pour découper le trou 17 de la pastille 9. Le bloc 43 est muni d'une ouverture annulaire 44 pour laisser la place aux dents lors de l'opération de découpage.

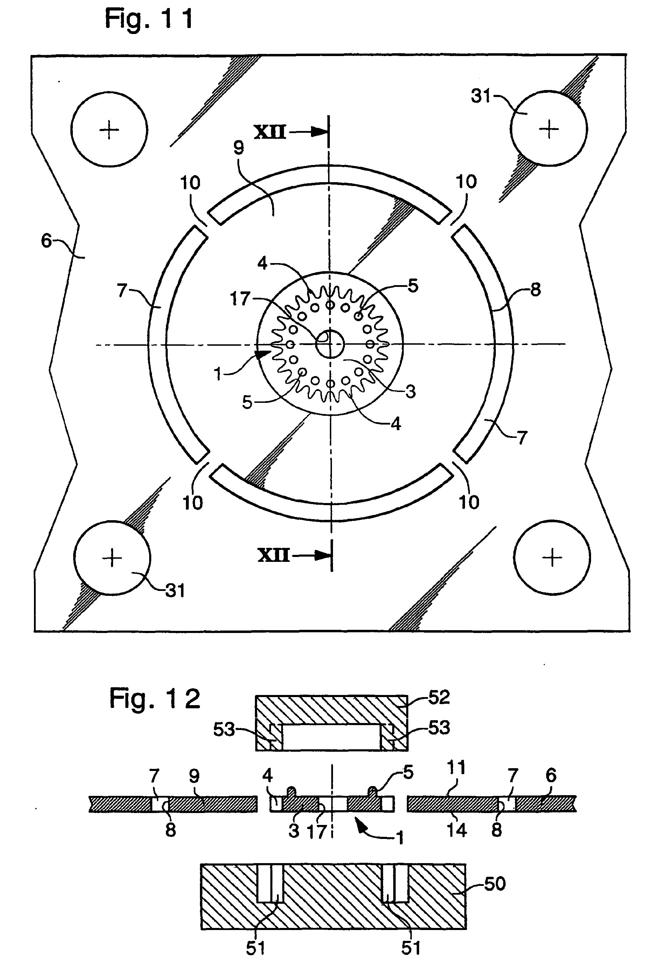

La quatrième étape est illustrée par les figures 11 et 12. Lors de cette quatrième et dernière étape, on recueille le mobile terminé 1. Pour cela, comme on le voit en figure 11, on découpe la première série de dents 4 dans la pastille 9, ce découpage entraînant tout naturellement la séparation du mobile de la bande 6. Les outils utilisés pour cette dernière opération sont montrés en coupe sur la figure 12 qui montre aussi la bande 6 et le mobile 1 après découpage de ce mobile, la coupe étant opérée selon la ligne XII-XII de la figure 11. L'outil de découpage comporte une matrice 50 dans laquelle sont taillées les dents 51 à reproduire sur le mobile et un poinçon 52 présentant des dents correspondantes 53. Comme le montre bien la figure 12, quand le découpage est terminé, le mobile 1 est pourvu de sa denture périphérique 4 en même temps qu'il est séparé de la pastille 9. Pour reprendre l'exemple du mobile cité plus haut à propos de la deuxième étape et qui comporte seize dents de chant 5, ce mobile, après découpage décrit à la quatrième étape, comporte vingt-six dents périphériques 4.

On touche du doigt ici l'élégance de la méthode proposée puisqu'elle remplace avantageusement, que les dents de chant 5 soient cylindriques ou de forme, la méthode d'usinage usuelle qui consiste à produire une ébauche du renvoi, puis à procéder d'abord à un premier taillage des dents périphériques de la planche et ensuite à un second taillage des dents de chant. La méthode utilisant le fluage de matière est donc meilleur marché surtout par l'économie du temps nécessaire à confectionner le renvoi.

Comme on l'a évoqué ci-dessus, le procédé décrit est utilisé pour fabriquer un renvoi, ce renvoi comportant sur la même planche une denture périphérique et une denture de chant. Ledit renvoi est utilisé soit dans un mécanisme de mise à l'heure comme montré en figure 1, soit dans un mécanisme de mise à la date d'un indicateur de quantième.

## Revendications

1. Procédé de fabrication d'un mobile (1, 2) d'horlogerie comportant une planche (3) pourvue d'une première série de dents (4) dans sa périphérie et d'une seconde série de dents (5, 19) dressées perpendiculairement à la planche, ce procédé comportant la succession des étapes suivantes :
- on fournit une bande (6) d'acier d'emboutissage,
- on découpe un anneau (7) circulaire dans la bande (6), le diamètre intérieur (8) de cet anneau circonscrivant une pastille (9) de laquelle sera tiré le mobile, ladite pastille restant attachée à la bande par une pluralité de ponts (10),
- sur une face (11) de la pastille (9) on applique une matrice (12) perforée d'une pluralité d'ouvertures (13) disposées en cercle et sur l'autre face (14) de la pastille on presse la face (15) plane d'un cylindre (16) pour faire pénétrer par fluage l'acier à l'intérieur des ouvertures de la matrice pour former la seconde série de dents (5, 19) après quoi on éloigne la matrice (12) et le cylindre (16) de la pastille,
- on découpe un trou (17) au centre de la pastille, et
- on recueille le mobile (1, 2) terminé en découpant la première série de dents (4) dans la pastille, ce découpage entraînant la séparation dudit mobile de ladite bande.

2. Procédé selon la revendication 1, **caractérisé par le fait que** les ouvertures (13) disposées en cercle dans la matrice (12) sont des trous cylindriques pour former une seconde série de dents cylindriques (5).

3. Procédé selon la revendication 2, **caractérisé par le fait que** chaque trou cylindrique est obturé par une goupille (18) la profondeur du trou définissant la hauteur des dents (5).

4. Procédé selon la revendication 1, **caractérisé par le fait que** les ouvertures (13) disposées en cercle dans la matrice (12) sont des trous de forme pour former une seconde série de dents de forme (19).

## Claims

1. Method for manufacturing a clockwork wheel (1, 2) including a plate (3) provided with a first series of teeth (4) on the periphery thereof and a second series of teeth (5, 19) arranged at right angles to the plate, this method including the following series of steps:
- providing a strip (6) of steel suitable for stamping,
- cutting a circular ring (7) in the strip (6), the inner diameter (8) of such ring circumscribing a disc (9) from which the wheel will be taken, said disc remaining attached to the strip by a plurality of bridges (10),
- applying onto one face (11) of the disc (9) a die (12) perforated with a plurality of openings (13) arranged in a circle, and pressing onto the other face (14) of the disc the flat face (15) of a cylinder (16) to cause the steel to flow inside the openings of the die to form the second series of teeth (5, 19) after which the die (12) and cylinder (16) are removed from the disc,
- cutting a hole (17) at the centre of the disc, and
- retrieving the finished wheel (1, 2) by cutting the first series of teeth (4) out of the disc, thereby separating said wheel from said strip.

2. Method according to claim 1, **characterized in that** the openings (13) arranged in a circle in the die (12) are cylindrical holes to form a second series of cylindrical teeth (5).

3. Method according to claim 2, **characterized in that** each cylindrical hole is obturated by a pin (18) the depth of the hole defining the height of the teeth (5).

4. Method according to claim 1, **characterized in that** the openings (13) arranged in a circle in the die (12) are shaped holes to form a second series of shaped teeth (19).

## Patentansprüche

1. Verfahren zum Herstellen eines beweglichen Elements (1, 2) für ein Zeitmessgerät, das eine Platte (3) umfasst, die mit einer ersten Reihe von Zähnen (4) an ihrem Umfang und mit einer zweiten Reihe von Zähnen (5, 19), die senkrecht zu der Platte ausgerichtet sind, versehen ist, wobei das Verfahren die Abfolge der folgenden Schritte umfasst:
- Bereitstellen eines Ziehstahl-Bandes (6),
- Ausschneiden eines kreisförmigen Rings (7) in dem Band (6), wobei der Innendurchmesser (8) dieses Rings eine Pastille (9) umschreibt, aus der das bewegliche Element gezogen wird, wobei die Pastille durch mehrere Brücken (10) an dem Band befestigt bleibt,
- Drängen eines Gesenks (12), das von mehreren Öffnungen (13) durchsetzt ist, die auf einem Kreis angeordnet sind, gegen eine Fläche (11) der Pastille (9), während gegen die andere Fläche (14) der Pastille die ebene Fläche (15) eines Zylinders (16) gepresst wird, um zu bewirken, dass der Stahl durch Kriechen in das innere der Öffnungen des Gesenks eindringt, um die zweite Reihe von Zähnen (5, 19) zu bilden, woraufhin das Gesenk (12) und der Zylinder (16) von der Pastille entfernt werden,
- Ausschneiden eines Lochs (17) in der Mitte der Pastille und
- Erhalten des fertig gestellten beweglichen Elements (1, 2) durch Ausschneiden der ersten Reihe von Zähnen (4) in der Pastille, wobei dieses Ausschneiden die Trennung des mobilen Elements von dem Band zur Folge hat.

2. Verfahren nach Anspruch 1, **dadurch gekennzeichnet, dass** die Öffnungen (13), die in dem Gesenk (12) kreisförmig angeordnet sind, zylindrische Löcher sind, um eine zweite Reihe zylindrischer Zähne (5) zu bilden.

3. Verfahren nach Anspruch 2, **dadurch gekennzeichnet, dass** jedes zylindrische Loch durch einen Zapfen (18) verschlossen ist, wobei die Tiefe des Lochs die Höhe der Zähne (5) definiert.

4. Verfahren nach Anspruch 1, **dadurch gekennzeichnet, dass** die Öffnungen (13), die in dem Gesenk (12) kreisförmig angeordnet sind, Formlöcher sind, um eine zweite Reihe von Formzähnen (19) zu bilden.
